# DEMANDE DE BREVET EUROPEEN

(11) **EP 0 741 287 A1**
(43) Date de publication de la demande: **06.11.1996**
(21) Numéro de dépôt: 96420141.2
(22) Date de dépôt: 24.04.1996
(51) Int. Cl.: G01M 3/02, G01M 3/10

(54) **Installation pour la vérification du circuit de refroidissement d'une culasse de moteur thermique**

(30) Priorité: 03.05.1995 FR 9505493
(71) Demandeur: MACHINES SERDI, 74000 Annecy (FR)
(72) Inventeur: Tenand, Fernand, 74940 Annecy Le Vieux (FR); Pereira, Fernand, 73000 Chambery (FR)
(74) Mandataire: Perrier, Jean-Pierre

(57) **Abrégé**

Installation pour la vérification du circuit de refroidissement d'une culasse de moteur thermique par immersion dans un bac d'eau chaude, comprenant un bac (3) de réception d'eau, un châssis porte culasse (4) avec deux barres longitudinales (5), ce châssis étant monté rotatif, aux extrémités libres des deux bras inclinés (8) d'une potence (9) mobile verticalement, et coopérant avec des moyens de fixation de la culasse (21) sur lui, des moyens pour déplacer verticalement la potence entre une position supérieure, de mise en place ou de déchargement de la culasse sur le châssis, et une position inférieure d'immersion d'au moins une partie de la culasse dans le bac et des moyens disposés à l'extrémité inférieure d'un bras de la potence, pour faire pivoter le châssis porte culasse

## Description

L'invention concerne une installation pour la vérification du circuit de refroidissement d'une culasse de moteur thermique.

Les causes d'intervention en réparation sur un moteur thermique, et principalement sur une culasse, résultent le plus souvent d'un problème d'échauffement anormal pouvant être dû à un manque d'eau, un mauvais fonctionnement de la pompe ou à une fuite du circuit de refroidissement dans la culasse. C'est la raison pour laquelle, avant toute opération d'usinage sur une culasse, il est nécessaire de s'assurer de la qualité du circuit de refroidissement en procédant à un test d'étanchéité.

L'invention concerne plus particulièrement le test d'étanchéité consistant, après avoir obturé, par des bouchons appropriés, les orifices du circuit de refroidissement débouchant d'un seul côté de la culasse par des bouchons appropriés, à immerger cette culasse dans un bac contenant de l'eau chaude à une température proche de la température de fonctionnement de la culasse, puis, lorsque la culasse est sensiblement à la température de l'eau, à injecter de l'air comprimé dans son circuit de refroidissement, par un bouchon aménagé à cet effet. Si le circuit de refroidissement de la culasse n'est pas étanche et, par exemple, si la culasse est localement fêlée, des bulles apparaissent à la surface de l'eau et indiquent cette défaillance.

On notera que, selon les types d'installation, soit la culasse est posée dans le fond d'un bac qui est rempli d'eau chaude, soit elle est fixée sur un châssis porte culasse qui est immergé dans un bac d'eau chaude. Quelle que soit la technique de mise en oeuvre, les fuites d'air s'effectuant à partir de la face inférieure de la culasse, qui est disposée à proximité du fond du bac, ne permettent pas de localiser précisément l'endroit de la fuite.

Par ailleurs, le montage de la culasse sur le châssis porte culasse, de même que l'obturation des orifices du circuit de refroidissement mettent en oeuvre de nombreuses brides et conduisent à une manipulation longue et fastidieuse qui, compte tenu de la très grande diversité de forme, dimensions et géométrie des culasses existantes, peut intervenir de manière très sensible sur le prix de revient du test d'étanchéité.

La présente invention a pour objet de remédier à ces inconvénients en fournissant une installation simplifiant les opérations de montage de la culasse sur un porte culasse, tout en réduisant le temps de montage, quelles soient la forme, les dimensions et la géométrie de cette culasse.

Elle vise plus particulièrement une installation dans laquelle le châssis porte culasse est formé de deux barres, longitudinales et montées libres en rotation aux extrémités libres des deux bras inclinés d'une potence, mobile verticalement par rapport à un bac sous-jacent.

Dans l'installation selon l'invention, les moyens de fixation de la culasse sur les deux barres longitudinales de section cylindrique du châssis porte culasse comprennent, en complément de deux traverses, au moins deux sangles qui, aptes à plaquer la culasse contre les traverses, sont munies chacune, à une extrémité, d'un crochet d'accrochage sur l'une des barres cylindriques, et à l'autre extrémité, d'un tendeur muni d'un crochet pour l'accrochage sur l'autre barre cylindrique.

Avec cet agencement, pour fixer une culasse sur le châssis porte culasse, il suffit, dans un premier temps de régler l'écartement des traverses rigides, de manière qu'elles puissent servir d'appui à la culasse, en coopérant avec une partie de celle-ci ne comportant pas un orifice du circuit d'échappement, dans un deuxième temps, de poser la culasse avec ses orifices d'échappement débouchant vers le bas sur les deux traverses, puis enfin, dans un troisième temps, de mettre en place les sangles en réglant leur tension en fonction du poids de la culasse. Les tendeurs permettent l'irréversibilité de la tension des sangles pendant l'immersion et assure 11
sécurité de l'utilisateur. Ce réglage de tension plaque la partie supérieure des sangles sur la face supérieure de la culasse et cela quelle que soit la géométrie de cette face, (horizontale ou inclinée), et simultanément cale les traverses par rapport aux barres longitudinales du châssis.

Il peut alors être procédé au retournement de la culasse, à l'aide d'un système mécanique manuel ou automatique, entrainant en rotation l'ensemble des deux barres, pour procéder à l'obturation des orifices du circuit de refroidissement avant immersion de l'ensemble châssis et culasse dans le bac sous-jacent.

Dans une forme de mise en oeuvre préférée, et pour faciliter l'opération d'obturation du circuit de refroidissement de la culasse, l'installation comprend des traverses complémentaires pour la fixation des moyens d'obturation du circuit de refroidissement de la culasse, chacune de ces traverses étant composée de barreaux parallèles et espacés qui, délimitant, entre eux, un couloir pour le passage de paliers d'appui coulissants et amovibles, d'un côté, sont fixés sur un crochet fixe, apte à coopérer avec l'une des barres du châssis, et, de l'autre côté, portent l'axe d'articulation d'un autre crochet et des moyens de calage de ce crochet contre la barre longitudinale correspondante du châssis.

Avantageusement, les deux barres longitudinales du châssis de la culasse sont fixées à des flasques extrêmes, montées à pivot aux extrémités inférieures des bras de la potence, et les moyens pour faire pivoter le châssis porte culasse sont constitués par une roue dentée, calée sur l'un des pivots du porte culasse et reliée, par un moyen de transmission disposé dans le bras correspondant, à un moyen moteur, lui-même fixe à l'extrémité supérieure du bras, tandis que le bac a une largeur suffisante pour permettre la rotation, en position d'immersion, du porte culasse et de la culasse fixée sur lui.

Ainsi, le porte culasse peut pivoter de 180 °, autour d'un axe horizontal et dans les sens, aussi bien lorsqu'il est en position haute, correspondant aux phases de montage ou de démontage de la culasse, que lorsqu'il est en position basse d'immersion dans le bac, pour faciliter la détection de l'origine des fuites d'air, lors du test d'étanchéité.

D'autres caractéristiques et avantages ressortiront de la description qui suit, en référence au dessin schématique annexé représentant, à titre d'exemple, une forme d'exécution de cette installation.
Figure 1 est une vue en perspective de l'ensemble de l'installation,
Figures 2 et 3 sont des vues de côté en coupe du châssis porte culasse, respectivement lors de la mise en place de la culasse et lors de la mise en place des bouchons,
Figure 4 est une vue partielle en coupe de l'une des extrémités d'une traverse complémentaire,
Figure 5 est une vue partielle en perspective du châssis porte culasse avec ses diverses traverses,
Figure 6 est une vue de côté en coupe suivant VI-VI de figure 4
Figure 7 est une vue en plan par dessus du châssis porte culasse, lorsqu'il est dans la position de figure 3.
Figures 8 et 9 sont des vues de côté avec coupe partielle montrant deux des phases du montage sur les barres d'une culasse obturée par une plaque spécialisée, adaptée à la culasse.

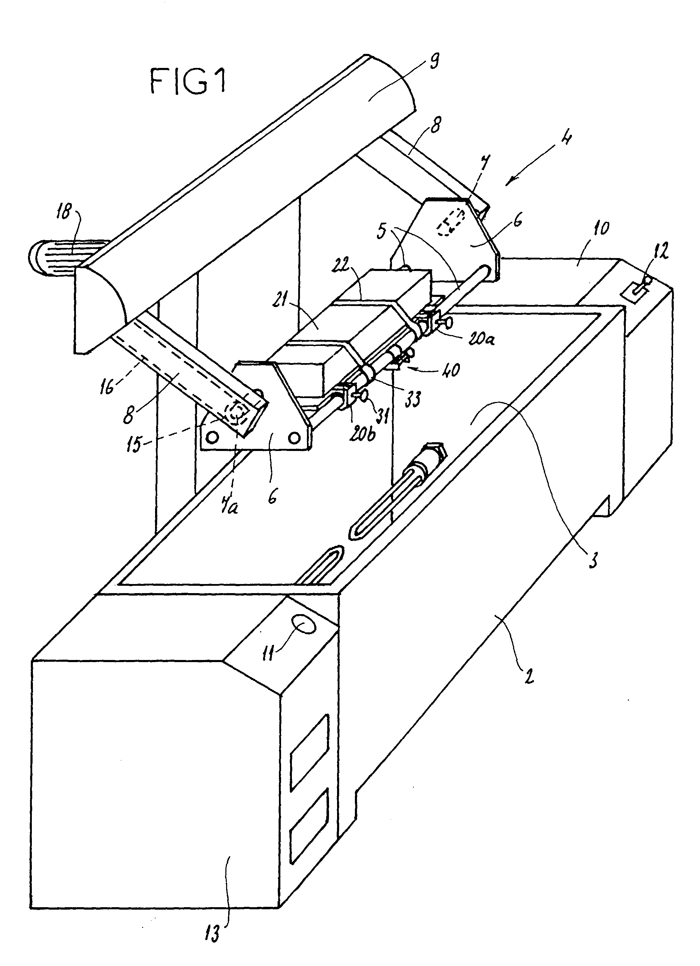

Dans la forme d'exécution représentée à la figure 1, l'installation est composée d'un châssis 2 portant un bac 3, apte à contenir de l'eau chaude, et d'un châssis porte culasse désigné par la référence générale 4. Ce dernier est composé de deux barres longitudinales 5, parallèles et de section cylindrique, fixées par leurs extrémités sur deux flasques extrêmes 6, de forme trapézoïdale. Chacun des flasques est solidaire d'un pivot horizontal 7 par lequel il est monté libre en rotation dans des paliers, non représentés, ménagés à l'extrémité inférieure des deux bras inclinés 8 d'une potence 9. Cette potence est mobile verticalement et reliée à des moyens aptes à la déplacer, tel qu'un vérin hydraulique, non représenté.

Le châssis 2 est bordé par un caisson latéral 10, contenant la centrale hydraulique gérant les mouvements du vérin de déplacement de la potence, et les moyens de commande 12 des mouvements verticaux de la potence et de la rotation du châssis 4. Un autre caisson 13, bordant l'autre extrémité du bac 3, porte les moyens 11 de réglage de l'alimentation de canes chauffantes 14 disposées dans le fond du bac.

Suivant une caractéristique de l'invention, la largeur du bac est déterminée de manière à permettre, non seulement, la rotation du châssis porte culasse 4, mais aussi de la culasse la plus haute pouvant être fixée sur ce châssis. Une largeur de 600 mm permet de vérifier la plupart des culasses du marché.

Par ailleurs, l'un des pivots, et par exemple, celui 7a à la figure 1, est solidaire d'une roue dentée 15 reliée, par un moyen de transmission tel qu'une chaîne 16 disposée dans le bras 8 correspondant, à une autre roue dentée, montée libre en rotation à l'extrémité supérieure de ce bras. Cette roue dentée est calée sur l'arbre de sortie d'un motoréducteur 18 fixé sur la partie supérieure de la potence 9. On notera que la transmission par chaîne 16 permet d'assurer l'entraînement en rotation du châssis 4, même lorsqu'il est trempé dans de l'eau à 90°C, ce qui n'est pas possible avec les dispositifs actuels incluant un entraînement manuel agissant directement sur l'un des pivots du châssis.

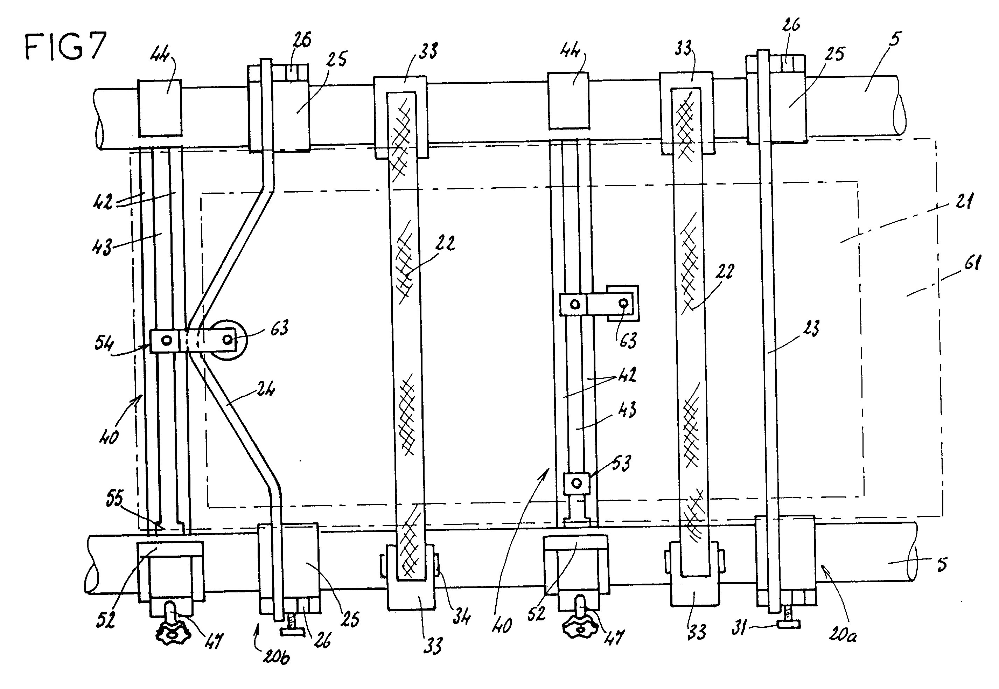

Comme montré figure 7, les moyens de fixation d'une culasse 21 sur les barres 5 du châssis 4 comprennent au moins deux traverses rigides 20a, 20b et, au moins deux sangles 22. Chaque traverse rigide est composée d'une barre transversale qui est soit rectiligne, comme montré en 23 pour la traverse 20a, soit cambrée en "V", comme montré en 24 pour la traverse 20b, et de deux paliers 25 montés coulissants sur les deux barres 5. Chaque palier 25 est solidaire d'au moins une chape verticale 26 de réception et de fixation de l'extrémité de la barre, 23 ou 24, correspondante. Ce mode de liaison assure une parfaite solidarisation d'une barre de traverse 23 ou 24 avec les paliers 25, tout en permettant son démontage pour la remplacer par une barre ayant une autre forme, en fonction de la configuration des orifices du circuit d'échappement débouchant de la face 21a de la culasse 21. Au moins l'un des paliers 25 de chaque traverse est doté d'une vis 31 permettant son blocage sur la barre correspondante.

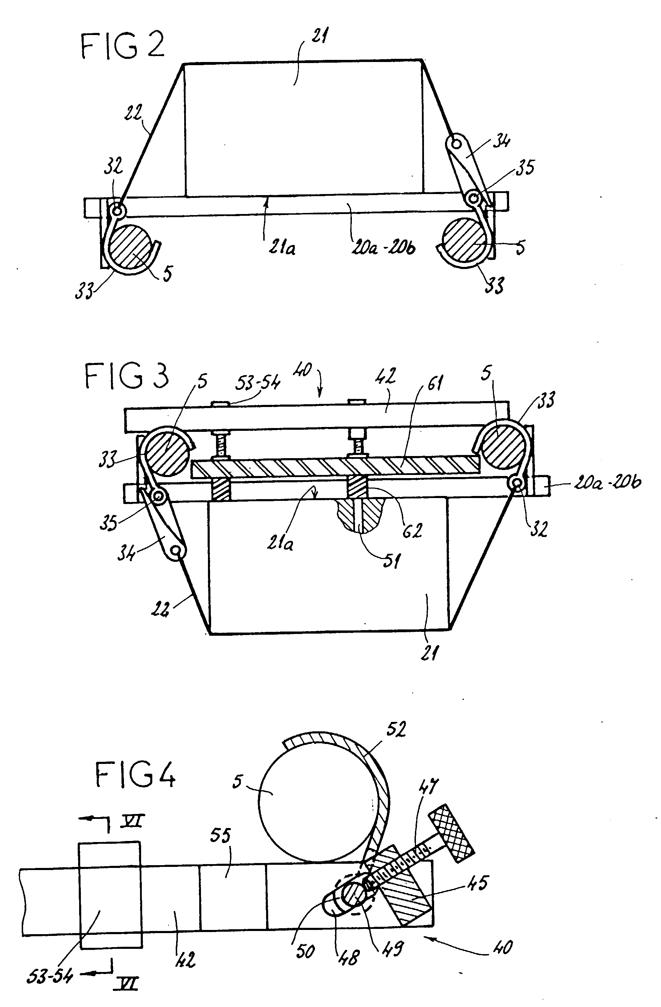

La figure 2 montre que l'extrémité libre de chacune des sangles 22 est reliée, par un axe d'articulation 32, à un crochet 33 apte à coopérer avec l'une des barres 5 du châssis 4, tandis que son autre extrémité est enroulée sur un tendeur à cliquet et à levier 34, lui-même relié, par un autre axe d'articulation 35, à un crochet 33.

L'installation comporte également des traverses complémentaires 40 pour la fixation des moyens d'obturation du circuit de refroidissement. Comme montré plus en détails aux figures 3 à 5 et 7, chacune de ces traverses est composée de deux barreaux 42, parallèles et espacés, et délimitant entre eux un couloir 43. Ces deux barreaux constitués par des fers plats de section rectangulaire posés sur champ, sont liés par l'une de leurs extrémités à un crochet 44, apte à coopérer avec l'une des barres 5 du châssis. Leurs autres extrémités sont reliées par un talon incliné 45 comprenant un alésage fileté pour une vis de serrage 47. A proximité du talon 45, chacun des barreaux comporte une lumière oblongue 48 qui, orientée parallèlement à l'axe longitudinal de la vis 47, constitue portée de maintien pour un axe 49 dont les deux extrémités passent à l'extérieur des barreaux. Sur ces deux extrémités sont articulés les deux paliers 50 d'un crochet 52.

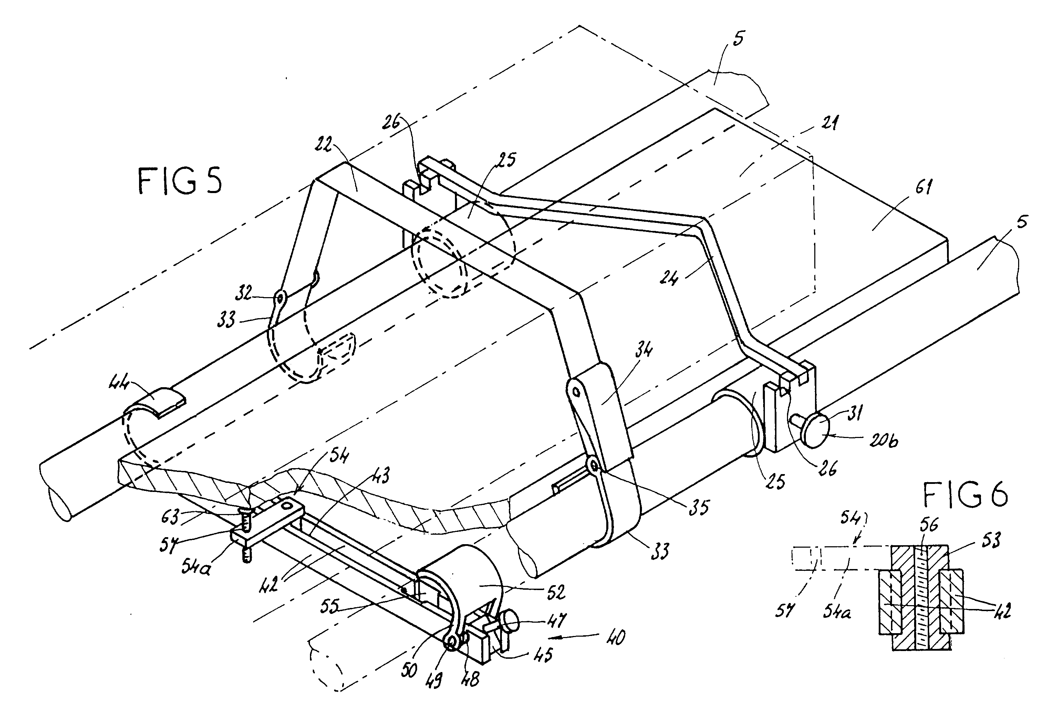

Chaque traverse est destinée à coopérer avec des paliers 53 ou 54 (figure 6). Chacun de ces paliers présente une section transversale en "I" lui permettant, après engagement par un élargissement 55 du couloir 43, de pénétrer dans ce couloir et d'y coulisser librement. Le palier 54 , représente en traits mixtes figure 6, se différencie du palier 53 par le fait que, en plus de l'alésage axial fileté 56, il comporte une aile latérale plus longue 54a munie d'un alésage fileté 57.

Le montage d'une culasse en vue d'un test d'étanchéité au moyen de cette installation s'effectue de la façon suivante.

Le châssis porte culasse 4 est d'abord amené par la potence 9 dans une position de chargement, dans laquelle il est au-dessus du bac 3 avec les deux barres 5 et les flasques 6 dans la position représentée à la figure 1. A ce stade, les traverses d'appui 20a ou 20b sont rapprochées l'une de l'autre, de manière à former appui pour la face 21a de la culasse de laquelle débouchent les orifices du circuit d'échappement de cette culasse 21. Il est ensuite procédé à l'accrochage des crochets 33 des sangles 22, puis à la mise sous tension de ces sangles au moyen des tendeurs 34. La figure 2 montre que cette mise sous tension a pour effet de plaquer la culasse 21 sur les traverses d'appui 20a et 20b et de caler ces traverses d'appui par rapport aux barres longitudinales 5. Cette tension de serrage dépend du poids de la culasse.

On notera que le plaquage de la culasse 21 sur le porte culasse 4 s'effectue quelle que soit la forme de sa surface d'appui qui peut être horizontale ou inclinée par rapport à l'horizontal, et quelle que soit sa géométrie, puisque, dans ce cas là, les sangles épousent ses angles sortants et s'adaptent aux angles rentrants de cette géométrie.

Après fixation de la culasse 21, l'ensemble du châssis 4 est pivoté de 180°, de manière que la face 21a de laquelle débouchent les orifices 51 du circuit d'échappement soient tournés vers le haut, comme montré figure 3. Il est alors procédé à l'obturation des orifices 51, soit directement au moyen d'une plaque porte-joint en matière synthétique transparente portant des joints aptes à entourer les orifices 51, et en conséquence adaptés spécifiquement à la culasse, soit au moyen de bouchons d'obturation 62 (figure 3) qui sont eux-mêmes plaqués par une plaque transparente 61. Le plaquage de la plaque 61, et en conséquence l'étanchéité de l'obturation procurée par les joints, est assurée au moyen de poussoirs filetés 63 se vissant dans les alésages filetés 56 ou 57 des paliers 53 ou 54, portés par les traverses complémentaires 40. Plus précisément, l'opérateur positionne les traverses 40 et sélectionne les paliers, de manière que chaque poussoir fileté 63 vienne prendre appui sensiblement dans l'axe longitudinal de l'orifice devant être obturé de manière à garantir l'étanchéité. Ce réglage est d'autant plus aisé que les traverses 40 peuvent être déplacées sur les barres longitudinales 5 puis, une fois positionnées, calées en position en vissant le corps de la vis 47 dans le talon 45, de manière que l'extrémité de la vis poussant l'axe 49 du crochet 52, correspondant, cale ce crochet sur la barre longitudinale 5.

De façon connue, l'un des joints 62 communique avec un corps radial pouvant, lui-même, être raccordé à une source d'air comprimé, de manière que, après immersion de l'ensemble du châssis 4 et de la culasse 21 dans le bac 3, il puisse être insufflé de l'air comprimé dans le circuit de refroidissement de cette culasse.

Durant le test, qui ne commence que lorsque la culasse est sensiblement à la température de l'eau dans laquelle elle est immergée, l'opérateur peut faire pivoter le châssis 4, s'il s'avère qu'une fuite d'air se dégage de la partie inférieure de la culasse, cela précisément pour amener la face par laquelle il y a la fuite, dans une position permettant de détecter visuellement la position de cette fuite sur la culasse.

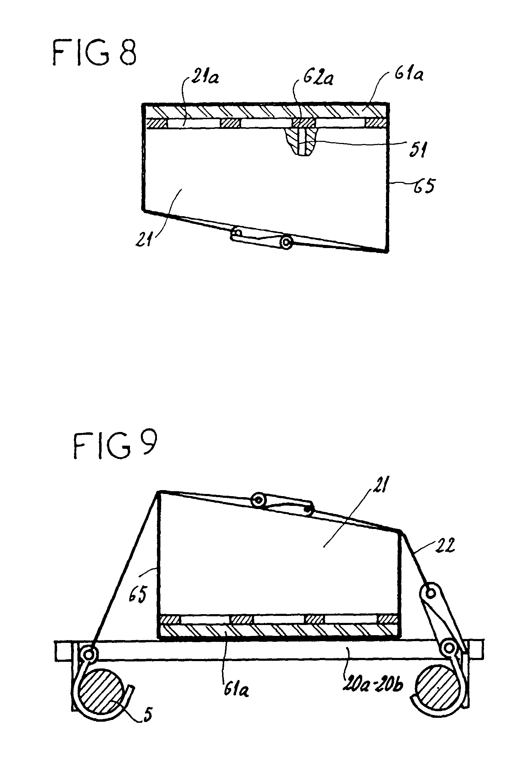

Lorsque l'obturation du circuit de refroidissement de la culasse est réalisée au moyen de plaques transparentes portant des joints aptes à entourer les orifices 51 du circuit de refroidissement et, en conséquence, adaptées spécifiquement à un type de culasse, la plaque 61a correspondante peut également, comme montré figure 8, être mise en place hors de l'installation. Elle est alors posée sur la face 21a de la culasse 21, reposant elle-même sur deux supports, espacés hors de l'appareil, puis fixée à la culasse par un jeu de deux sangles à tendeur 65 entourant cette culasse. Ensuite, l'ensemble culasse 21 - plaque 61a et sangles 65 est amené au dessus des traverses 20a, 20b sur lesquelles il prend appui par la plaque 61a, puis les sangles 22 sont mises en place pour fixer cet ensemble sur les barres 5, comme montré à la figure 9. Cette technique de montage est la plus intéressante car elle réduit considérablement le temps de préparation par rapport aux solutions actuelles, mais aussi par rapport à la solution précédente avec plaque standard 61 et traverses complémentaires 40.

Avantageusement, au moins la barre longitudinale avant 5a (figure 1) est montée de manière démontable dans les flasques 6. Cela permet, après démontage de cette barre et relèvement de la potence 9 à son point haut, de dégager l'accès à la cuve 3, par exemple pour y immerger une culasse ou une autre pièce de grandes dimensions ne pouvant pas être portée par les barres 5.

Il faut remarquer que le démontage de l'une ou des deux barres 5 n'est possible qu'en raison de la fixation de la culasse par appui au moyen de sangles sur les génératrices de barres de section circulaire, c'est à dire par une technique ne nécessitant pas un parallélisme et une géométrie parfaite, comme c'est le cas dans les installations actuelles. Ce type de fixation, n'imposant pas des tolérances dimensionnelles ou géométriques très étroites, permet également de réduire le coût de l'installation.

Il ressort de ce qui précède que l'ensemble des dispositions nouvelles de l'installation permettent non seulement de faciliter le montage d'une culasse sur le porte culasse, et en conséquence, de gagner du temps et de réduire le coût des tests, mais aussi de permettre ce montage, quelles que soient les formes, dimensions et géométrie des culasses, tout en permettant d'améliorer l'identification des zones de fuite.

## Revendications

1. Installation pour la vérification du circuit de refroidissement d'une culasse de moteur thermique par immersion dans un bac d'eau chaude, comprenant un bac (3) de réception d'eau, un châssis porte culasse (4) avec deux barres longitudinales (5) et au moins deux traverses (20a, 20b), montées coulissantes sur ces barres, ce châssis étant monté rotatif, aux extrémités libres des deux bras inclinés (8) d'une potence (9) mobile verticalement, et coopérant avec des moyens de fixation de la culasse (21) sur lui, des moyens pour déplacer verticalement la potence entre une position supérieure, de mise en place ou de déchargement de la culasse sur le châssis, et une position inférieure d'immersion d'au moins une partie de la culasse dans le bac et des moyens disposés à l'extrémité inférieure d'un bras de la potence, pour faire pivoter le châssis porte culasse, **caractérisée en ce que** les moyens de fixation de la culasse sur les deux barres longitudinales (5), de section cylindrique, du châssis porte culasse (4) comprennent, en complément des deux traverses (20a, 20b), au moins deux sangles (22) qui, aptes à plaquer la culasse (21) contre les traverses (20a, 20b), sont munies chacune, à une extrémité, d'un crochet (33) d'accrochage sur l'une des barres cylindriques, et, à l'autre extrémité, d'un tendeur (34) muni d'un crochet (33) pour l'accrochage sur l'autre barre cylindrique.

2. Installation selon la revendication 1, caractérisée en ce que chacun (33) des crochets ménagés aux extrémités d'une sangle (22) est monté à articulation autour d'un axe transversal (32, 35), par rapport, respectivement, à l'extrémité de sangle (22) et au tendeur (34) qui le porte.

3. Installation selon la revendication 1, caractérisée en ce qu'elle comprend des traverses complémentaires (40) pour la fixation des moyens d'obturation (62) du circuit de refroidissement de la culasse, chacune de ces traverses (40) étant composée de barreaux (42) parallèles et espacés qui, délimitant, entre eux, un couloir (43) pour le passage de paliers d'appui (52, 53) coulissants et amovibles, d'un côté, sont fixés sur un crochet fixe (44), apte à coopérer avec l'une des barres (5) du châssis (4), et, de l'autre côté, portent l'axe d'articulation (49) d'un autre crochet (52) et des moyens (47) de calage de ce crochet contre la barre longitudinale (5) correspondante du châssis.

4. Installation selon la revendication 3, caractérisée en ce que les moyens de calage du crochet articulé (52) sont constitués par une vis (47) dont le corps se visse dans un talon (45) de liaison entre les deux barres (42) de la traverse (40) et dont la tige prend appui sur l'axe d'articulation (49) du crochet, axe monté coulissant, à proximité de ses extrémités, dans deux paliers oblongs (48), ménagés dans les deux barres (42) de la traverse (40).

5. Installation selon la revendication 1, caractérisée en ce que les deux barres longitudinales (5) du châssis (4) de la culasse sont fixées à des flasques extrêmes (6), montés à pivot aux extrémités inférieures des bras (8) de la potence (9), et les moyens pour faire pivoter le châssis porte culasse (4) sont constitués par une roue dentée (15), calée sur l'un des pivots (7a) du porte culasse (4) et reliée, par un moyen de transmission (16) disposé dans le bras (8) correspondant, à un moyen moteur (18), lui-même fixé à l'extrémité supérieure du bras, tandis que le bac (3) a une largeur suffisante pour permettre la rotation, en position d'immersion, du porte culasse (4) et de la culasse fixée (21) sur lui.

6. Installation selon la revendication 1 caractérisée en ce que chacune des traverses (20a, 20b) est composée d'une barre transversale, rectiligne 23 ou cambrée en V 24 et de deux paliers 25 dans lesquels les extrémités de la barre correspondante sont fixées, au moins l'un des paliers 25 étant muni d'une vis 31 de blocage sur la barre longitudinale 5 correspondante.

7. Installation selon la revendication 1 caractérisée en ce qu'au moins l'une des barres longitudinales 5 est montré de manière démontable sur les flasques extrêmes 6 de la potence.
